# FASCICULE DE BREVET EUROPEEN

(11) **EP 2 164 141 B1**
(45) Date de publication et mention de la délivrance du brevet: **01.04.2015**
(21) Numéro de dépôt: 09290610.6
(22) Date de dépôt: 04.08.2009
(51) Int. Cl.: H02B 1/20, H01R 9/26, H01R 31/08

(54) **Peigne de raccordement électrique**
Klemmbacke für elektrischen Anschluss
Electrical connection comb

(30) Priorité: 10.09.2008 FR 0804976
(43) Date de publication de la demande: 17.03.2010
(73) Titulaire: Legrand France, 87000 Limoges (FR); Legrand SNC, 87000 Limoges (FR)
(72) Inventeur: Meriguet, Marcel, 87920 Condat sur Vienne (FR)
(74) Mandataire: Orsini, Fabienne

(56) Documents cités:
- EP-A- 1 137 034
- EP-A- 1 137 035
- DE-U1-202005 000 144
- DE-U1-202006 016 750
- FR-A- 2 613 144
- FR-A- 2 765 407

## Description

### DOMAINE TECHNIQUE AUQUEL SE RAPPORTE L'INVENTION

La présente invention concerne un peigne de raccordement électrique comportant un corps isolant de forme allongée qui comprend une paroi inférieure à travers laquelle une partie externe de chaque dent d'au moins une barre de raccordement électrique fait saillie, une paroi supérieure opposée à la paroi inférieure et s'étendant selon un plan parallèle à celui de cette paroi inférieure, deux parois avant et arrière qui relient lesdites parois supérieure et inférieure, ladite paroi arrière étant la plus proche desdites parties externes desdites dents.

### ARRIÈRE-PLAN TECHNOLOGIQUE

Les appareils modulaires électriques sont montés en rangée sur des rails de support d'un coffret, d'un tableau ou d'une armoire électrique. L'alimentation électrique de tous les appareils modulaires principaux d'une même rangée est réalisée par un unique peigne de raccordement qui comporte un corps isolant de forme allongée logeant une ou plusieurs barres de raccordement connectées à différents potentiels.

Les barres de raccordement comportent de manière classique des dents de connexion qui font saillie à travers une paroi inférieure du corps isolant du peigne de raccordement. Chaque dent de connexion d'une barre de raccordement est adaptée à être enfichée dans une borne de connexion d'un appareil modulaire principal accessible à travers une ouverture d'une face d'entrée d'un boîtier de celui-ci.

Lorsque les dents de la barre de raccordement sont enfichées dans les bornes de connexion des appareils modulaires principaux de la rangée, la paroi inférieure du corps isolant du peigne de raccordement s'applique contre la face d'entrée du boîtier desdits appareils modulaires.

Les peignes de raccordement connus présentent généralement une forme parallélépipédique.

En particulier, le corps isolant des peignes de raccordement tétrapolaires loge quatre barres de raccordement et présente donc une largeur importante. Ainsi, lorsqu'un peigne de raccordement tétrapolaire est connecté à une rangée d'appareils modulaires principaux, son corps isolant recouvre la majeur partie de la face d'entrée du boîtier de ces appareils. Le peigne de raccordement s'oppose alors à une bonne évacuation de la chaleur générée par effet Joule lors du passage du courant entre les dents de connexion des barres de raccordement et les bornes de connexion des appareils modulaires principaux. Cette mauvaise évacuation de la chaleur peut engendrer un échauffement dangereux de l'ensemble.

En outre, lorsqu'ils sont connectés, de tels peignes de raccordement interdisent l'accès aux bornes de connexion des appareils modulaires auxiliaires et rendent impossible le câblage éventuel d'un de ces appareils modulaires auxiliaires introduit au sein d'une rangée d'appareils modulaires principaux.

En effet, les bornes de connexion de ces appareils modulaires auxiliaires ne sont pas accessibles car elles sont situées sous la paroi inférieure du peigne de raccordement. Ces appareils modulaires auxiliaires doivent donc actuellement être placés en bout de rangée, en dehors de l'étendue du peigne de raccordement utilisé.

On connait également du document EP1137035 un peigne de raccordement comportant une unique barre de raccordement dans un corps isolant. Cette barre de raccordement comporte une partie plane à partir de laquelle s'étendent des dents de connexion coudées. Le corps isolant épouse la forme de la barre de raccordement jusqu'au coude des dents de connexion. La partie externe des dents de connexion s'étend donc selon une direction inclinée par rapport au corps isolant.

Le corps isolant entourant la barre de raccordement présente, selon les enseignements de ce document, une face inférieure et une face supérieure opposée inclinée par rapport à la partie externe des dents de connexion, en direction de la face arrière de l'appareillage électrique sur lequel le peigne est disposé. Les dents de connexion font saillie à travers la face inférieure.

Ici, la face inférieure et la face supérieure du corps isolant comportent, en vis-à-vis et entre chaque dent de connexion faisant saillie de la face inférieure, une encoche adaptée à libérer l'accès à une borne de connexion de l'appareillage modulaire située entre les bornes connectées aux dents de connexion du peigne.

La présence de ces encoches autorise la connexion de câbles d'alimentation à ces bornes de connexion.

Cette solution est cependant limitée au cas d'un peigne de raccordement ne comportant qu'une seul barre de raccordement.

Par ailleurs, le document EP 1137034 décrit un peigne de raccordement selon le préambule de la revendication 1.

### OBJET DE L'INVENTION

Un but de la présente invention est alors de proposer un peigne de raccordement qui, une fois connecté, autorise la connexion des câbles de raccordement d'appareils modulaires auxiliaires placés au milieu d'une rangée d'appareils modulaires principaux alimentés par ce peigne, et permet d'améliorer la dissipation de la chaleur produite au contact des dents de connexion de ce peigne et des bornes de connexion des appareils modulaires principaux. Un autre but de la présente invention est de proposer un tel peigne de raccordement pouvant loger une ou plusieurs barres de raccordement.

A cet effet, on propose selon l'invention un peigne de raccordement tel que défini dans la revendication 1.

Ainsi, grâce à l'invention, les bornes de connexion des appareils modulaires auxiliaires placés entre des appareils modulaires principaux d'une rangée ne sont plus recouvertes par la paroi inférieure du corps isolant du peigne de raccordement, elles sont accessibles au droit de la partie en porte-à-faux de la paroi supérieure de ce corps isolant, ce qui permet le câblage aisé de ces appareils modulaires auxiliaires.

En outre, l'espace libéré au droit de la partie en porte-à-faux de la paroi supérieure du corps isolant du peigne de raccordement conforme à l'invention permet une meilleure dissipation de la chaleur.

Enfin ce peigne de raccordement peut loger un nombre quelconque de barres de raccordement.

D'autres caractéristiques avantageuses et non limitatives du peigne de raccordement selon l'invention sont décrites dans les revendications 2 à 10.

### DESCRIPTION DÉTAILLÉE D'UN EXEMPLE DE RÉALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue en perspective avec un arraché latéral d'une rangée d'appareils modulaires principaux et auxiliaires équipée d'un peigne de raccordement selon l'invention ;
- la figure 2 est une vue de profil de la rangée d'appareils modulaires de la figure 1 ;
- la figure 3 est une vue en perspective avec un arraché latéral de deux appareils modulaires auxiliaires accueillant le peigne de raccordement de la figure 1 ;
- la figure 4 est une vue en coupe de la rangée de la figure 1 ;
- la figure 5 est une vue du détail A de la figure 4 ;
- la figure 6 est une vue de dessus de la rangée d'appareils modulaires principaux et auxiliaires de la figure 1, sur laquelle la zone de contact entre cette rangée d'appareil modulaire et le peigne de raccordement selon l'invention est représentée en ombré ;
- la figure 7 est une vue en perspective arrière du peigne de raccordement de la figure 1 ;
- la figure 8 est une vue en perspective avant du peigne de raccordement de la figure 1 ;
- la figure 9 est une vue de dessous du peigne de raccordement de la figure 1 ;
- la figure 10 est une vue de dessus du peigne de raccordement de la figure 1 ;
- la figure 11 est une vue de face du peigne de raccordement de la figure 1 ;
- la figure 12 est une vue de profil du peigne de raccordement de la figure 1 ; et
- la figure 13 est une vue éclatée du peigne de raccordement de la figure 1.

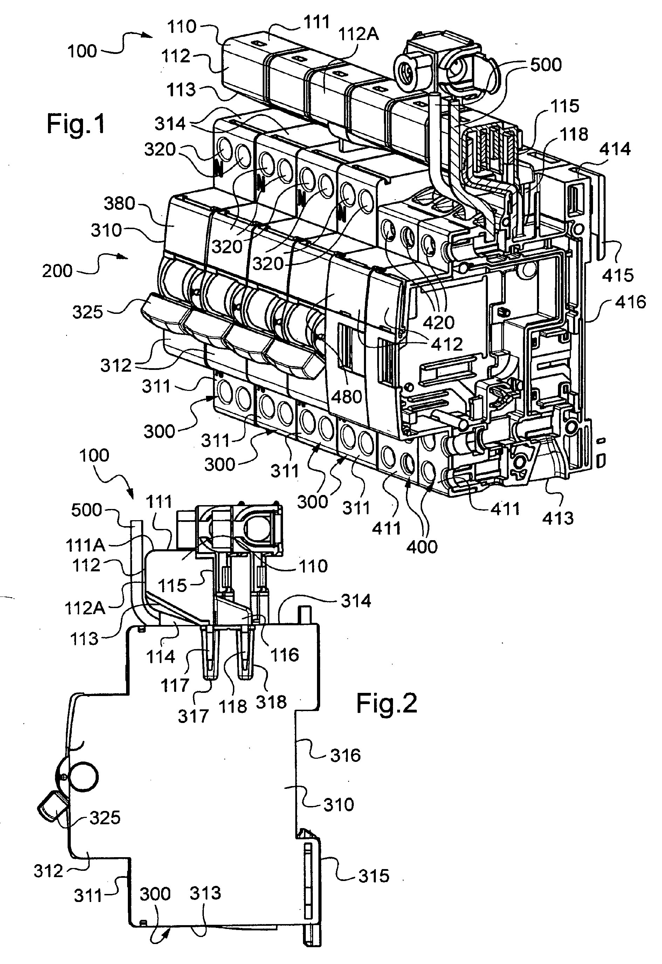

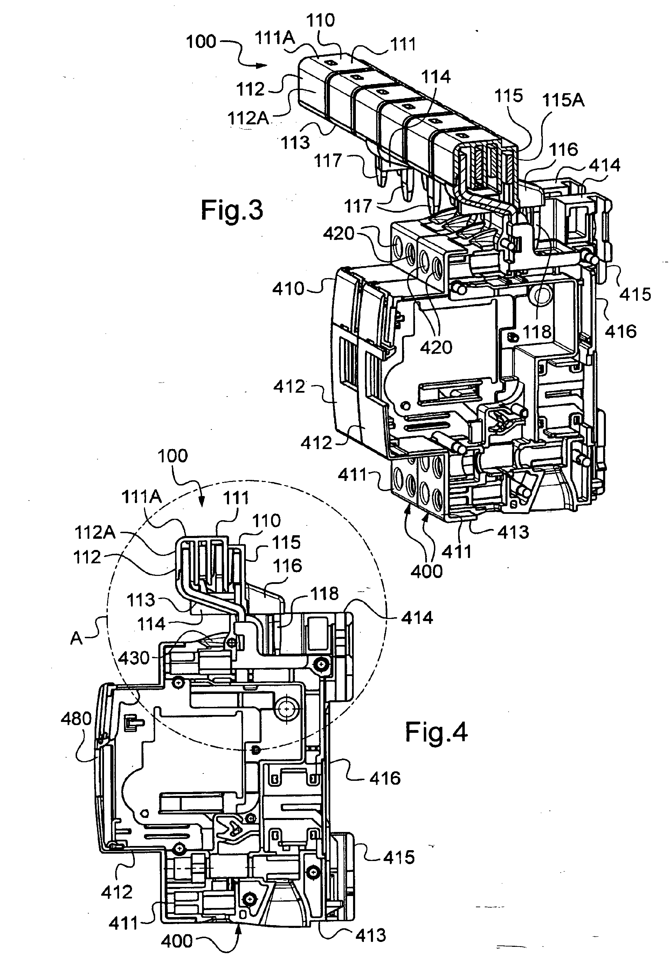

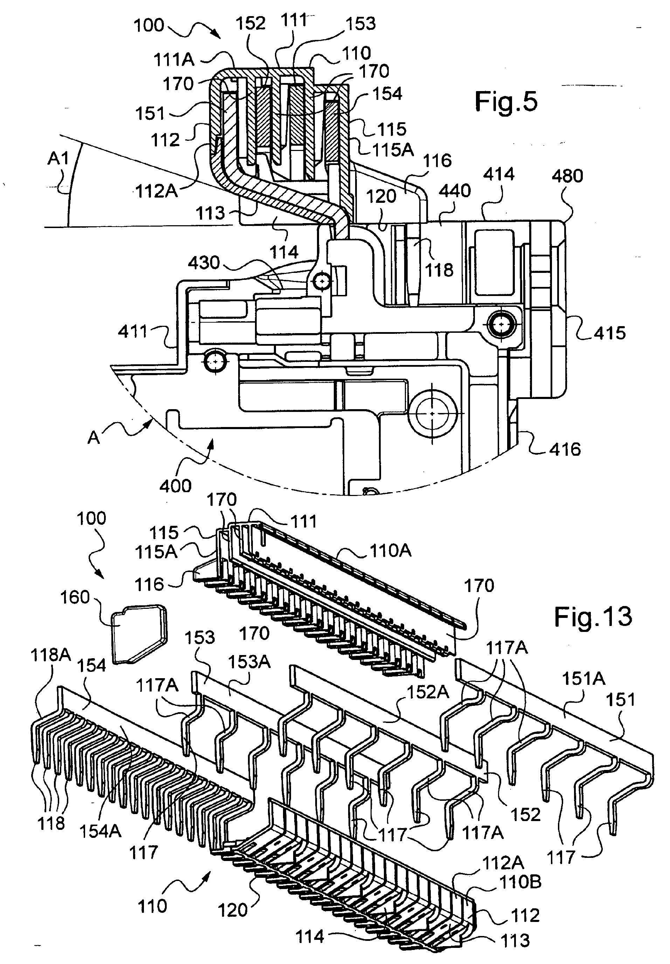

Sur les figures 1 à 13, on a représenté un peigne de raccordement 100 selon l'invention, comportant un corps isolant 110 de forme allongée qui loge quatre barres de raccordement 151, 152, 153, 154 (voir figure 5 et 13).

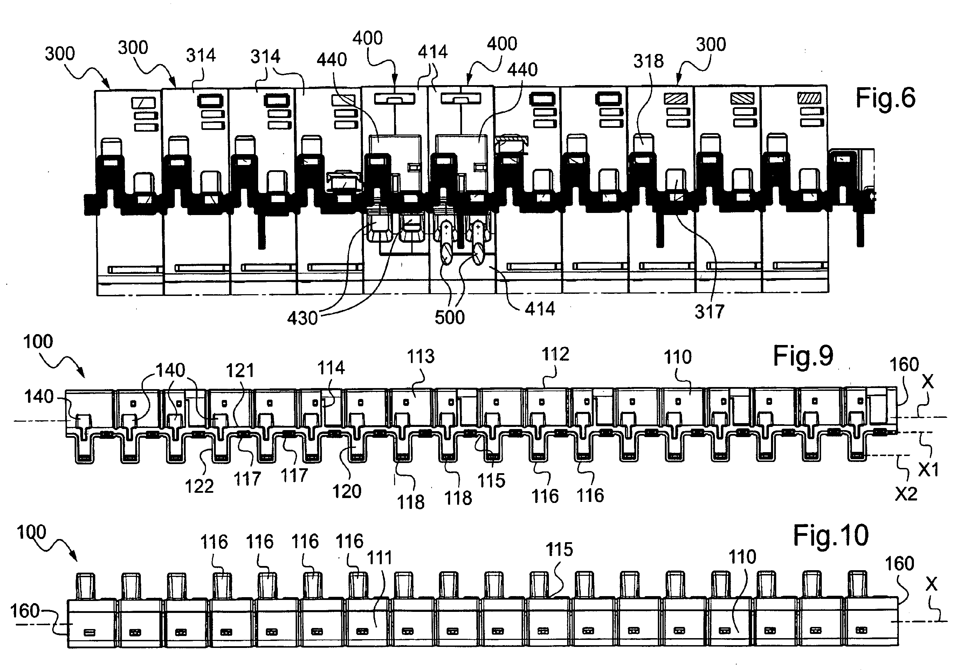

Ces barres de raccordement 151, 152, 153, 154 comportent chacune un barreau 151A, 152A, 153A, 154A (figure 5) logé dans le corps isolant 110 du peigne de raccordement 100 à partir duquel s'étendent des dents dont une partie interne 117A, 118A est logée dans ledit corps isolant 110 et une partie externe, appelée dent de connexion 117, 118, est destinée à être enfichée dans des bornes de connexion 317, 318 d'appareils modulaires principaux 300 (voir figures 2 et 6).

Ces appareils modulaires principaux 300 sont alignés avec des appareils modulaires auxiliaires 400 pour former une rangée 200 (voir figure 1). Les appareils électriques modulaires principaux 300 et auxiliaires 400 présentent une largeur standardisée égale à un multiple de la largeur d'un module de base environ égale à 18 millimètres.

Ces appareils modulaires 300, 400 seront décrits plus en détails ultérieurement.

Comme le montrent les figures 5 et 9, le corps isolant 110 du peigne de raccordement 100 comprend une paroi inférieure 120 à travers laquelle les dents de connexion 117, 118 des quatre barres de raccordement 151, 152, 153, 154 font saillie.

Cette paroi inférieure 120 comporte pour cela des ouvertures alignées selon deux axes X1, X2 (voir figure 9) : les dents de connexion 117 de chacune des trois barres de raccordement 151, 152, 153 de phase font saillie en alternance à travers les ouvertures alignées selon un premier axe X1 parallèle à l'axe longitudinale X du peigne de raccordement 100, tandis que les dents de connexion 118 de la barre de raccordement 154 de neutre font saillie à travers les ouvertures alignées selon un deuxième axe X2.

Ces ouvertures sont régulièrement espacées d'une distance environ égale à la largeur d'un module de base.

Ainsi, comme le montre la figure 13, les dents de connexion 117 des trois barres de raccordement 151, 152, 153 de phase sont espacées d'environ trois fois la largeur d'un module de base, tandis que les dents de connexion 118 de la barre de raccordement 154 de neutre sont espacées d'environ une fois la largeur d'un module de base.

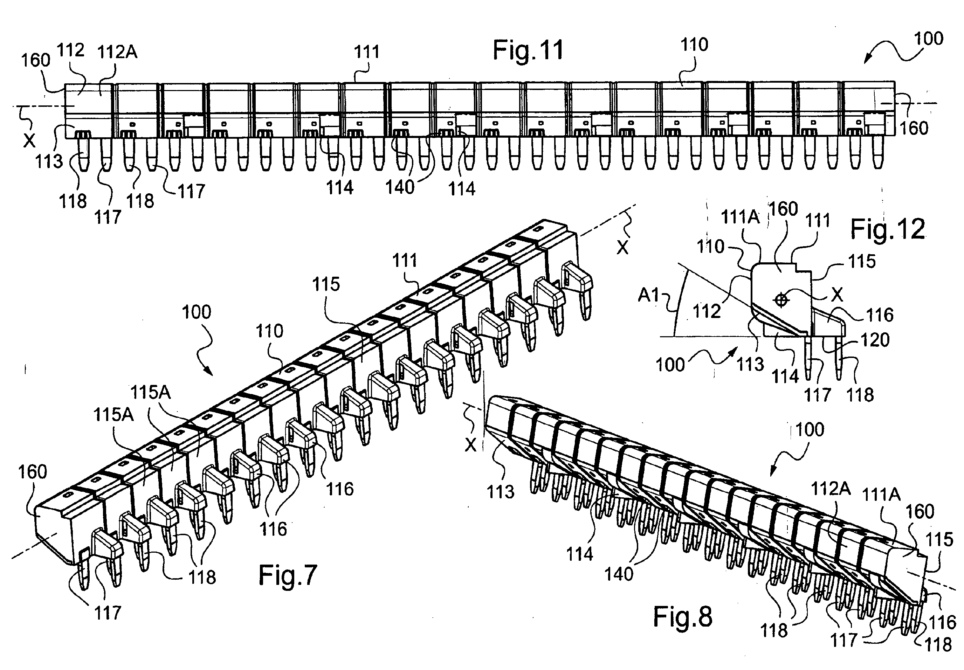

Comme le montrent les figures 5 et 11, le corps isolant 110 comprend également une paroi supérieure 111 opposée à cette paroi inférieure 120. La paroi supérieure 111 s'étend selon un plan parallèle à celui de la paroi inférieure 120.

Le corps isolant 110 comprend également deux parois avant 112 et arrière 115 qui relient lesdites parois supérieure 111 et inférieure 120 (voir figures 5 et 12).

La paroi avant 112 du corps isolant 110 du peigne de raccordement 100 est destinée à être orientée du coté avant des appareils modulaires accessible à l'utilisateur.

Ladite paroi arrière 115 est la plus proche desdites dents de connexion 117, 118. Elle est orientée du côté arrière des appareils modulaires non accessible à l'utilisateur.

Ici, comme le montrent plus particulièrement les figures 7 et 13, cette paroi arrière 115 comporte une partie plane 115A sensiblement perpendiculaire aux parois supérieure 111 et inférieure 120, à partir de laquelle des capots 116 font saillie pour recouvrir une partie interne 118A de chaque dent de la barre de raccordement 154 de neutre. Lesdites dents de connexion 118 de la barre de raccordement 154 de neutre font saillie de la paroi inférieure 120 à proximité de l'extrémité de ces capots 116. Lesdites dents de connexion 117 des barres de raccordement 151, 152, 153 de phase font saillie de la paroi inférieure 120 sensiblement au droit de la partie plane 115A de la paroi arrière 115.

Le corps isolant 110 est avantageusement réalisé en matière plastique, par moulage. Comme le montre la figure 13, le corps isolant 110 est par exemple constitué d'un assemblage de deux pièces moulées : une première pièce 110A formant la paroi supérieure 111 et la paroi arrière 115 et une deuxième pièce 110B formant la paroi inférieure 120 et la paroi avant 112.

Des cloisons internes 170 de séparation s'étendent ici perpendiculairement à la paroi supérieure 111 à l'intérieur du corps isolant 110 pour isoler les barres de raccordement 151, 152, 153, 154 métalliques les unes des autres (voir figures 5 et 13).

Le corps isolant 110 est fermé sur ses côtés latéraux par des joues d'obturation 160 (figure 9 à 13) rapportées sur les pièces 110A, 110B assemblées.

De manière remarquable, comme le montre plus particulièrement la figure 5, ladite paroi supérieure 111 du corps isolant 110 du peigne de raccordement 100 comporte, du côté de la paroi avant 112 de ce corps isolant 110, une partie 111A s'étendant en porte-à-faux par rapport à la paroi inférieure 120.

Ici, ladite paroi avant 112 comporte un biseau 113 (voir notamment figures 5 et 8), et la partie 111A en porte-à-faux de la paroi supérieure 111 correspond à la partie de la paroi supérieure 111 située au droit de ce biseau 113.

Le biseau 113 forme de préférence avec le plan de ladite paroi inférieure 120 un angle A1 compris entre 25 et 50 degrés, par exemple d'environ 30 degrés (voir figures 5 et 12).

Ici, la paroi avant 112 comporte une partie plane 112A sensiblement parallèle à la partie plane 115A de la paroi arrière 115, et ledit biseau 113 relie la paroi inférieure 120 à cette partie plane 112A de la paroi avant 112.

Alternativement, on peut envisager que le biseau forme entièrement la paroi avant et relie la paroi inférieure à la paroi supérieure du corps isolant du peigne de raccordement. On peut prévoir également que ladite paroi avant comporte, en remplacement ou en complément du biseau, un épaulement, ou tout autre aménagement permettant de décaler la paroi supérieure par rapport à la paroi inférieure.

Ici, comme le montre la figure 9, ladite paroi inférieure 120 encadre au plus près les dents de connexion 117, 118 de chaque barre de raccordement 151, 152, 153, 154. Pour cela, la paroi inférieure 120 présente une forme en créneaux.

Comme le montre la figure 9, l'un des côtés longitudinaux 121 de cette paroi inférieure 120, situé le long de la paroi avant 112 du corps isolant 110, est globalement droit et s'étend à proximité des ouvertures de cette paroi inférieure 120 qui sont alignées suivant le premier axe X1, tandis que l'autre coté longitudinal 122 de la paroi inférieure 120 situé le long de la paroi arrière 115 du corps isolant 110 présente une forme en créneaux et s'étend alternativement à proximité des ouvertures de cette paroi inférieure 120 qui sont alignées suivant le premier axe X1 et de celles qui sont alignées suivant le deuxième axe X2.

La paroi avant 112 comporte dans son biseau 113, à la jonction avec la paroi inférieure 120, pour chaque créneau, un renfoncement 140 accessible à l'utilisateur pour l'insertion de la pointe d'un outil facilitant la déconnexion du peigne de raccordement 100 de la rangée 200 d'appareils modulaires principaux 300 et auxiliaires 400 par un effet de levier.

Il est également prévu sur le corps isolant 110 des cloisons d'appui 114 s'étendant perpendiculairement à l'axe longitudinal X (voir figure 8) du peigne de raccordement 100, à partir du biseau 113 de la paroi avant 112 de ce corps isolant 110.

Ces cloisons d'appui 114 s'étendent selon un plan médian entre deux dents de connexion 117, 118 de neutre et de phase, au droit du milieu d'un d'appareil modulaire 300, 400 sur lequel le peigne de raccordement 100 est monté. Il est prévu une cloison d'appui 114 tous les trois couples de dents de connexion de phase 117 et de neutre 118.

Ces cloisons d'appui 114 permettent de stabiliser le peigne de raccordement 100 lorsque celui-ci est connecté aux appareils modulaires principaux 300 de la rangée 200 et d'éviter un basculement de ce peigne de raccordement 100 vers l'avant par appui sur la partie 111A en porte-à-faux de sa paroi supérieure 111, ce qui risquerait d'endommager les dents de connexion 117, 118 des barres de raccordement 151, 152, 153, 154 de ce peigne et les bornes de connexion 317, 318 des appareils modulaire principaux 300.

Comme le montrent plus particulièrement les figures 1 à 3, chaque appareil modulaire principal 300 et auxiliaire 400 comporte un boîtier 380, 480 isolant de forme globalement parallélépipédique, réalisé par exemple en matière plastique, qui présente deux faces latérales principales 310, 410 parallèles, une face arrière 315, 415, une face avant 311, 411 et deux faces transversales 313, 314, 413, 414 de raccordement électrique opposées.

Lorsque le peigne de raccordement 100 est connecté à une rangée d'appareils modulaires 300, 400, la paroi avant 112 du corps isolant 110 de ce peigne est orientée du côté de la face avant 311, 411 du boîtier 380, 480 de chaque appareil modulaire 300, 400, et la paroi arrière 115 de ce peigne est orienté du côté de la face arrière 315, 415 du boîtier 380, 480 de chaque appareil modulaire 300, 400.

Ici, lesdites deux faces latérales principales 310, 410 de chaque appareil modulaire principal 300 et auxiliaire 400 s'élèvent sur toute la hauteur de son boîtier 380, 480 et sont séparées d'une largeur égale à une fois la largeur d'un module de base.

La face arrière 315, 415 du boîtier 380, 480 de chaque appareil modulaire principal 300 et auxiliaire 400 comporte de manière classique une encoche 316, 416 pour le montage de ce boîtier 380, 480 sur un rail de support (non représenté). Elle comporte également des moyens de montage de chaque appareil modulaire principal 300 et auxiliaire 400 sur ce rail de support, destinés à plaquer ce rail de support au fond de cette encoche 316, 416.

Ces moyens de montage comportent ici par exemple deux verrous s'étendant le long de la face arrière 315, 415 du boîtier 380, 480 de chaque appareil modulaire principal 300 et auxiliaire 400. Ces deux verrous s'étendent de part et d'autre de l'encoche 316, 416, perpendiculairement à celle-ci.

La face avant 311, 411 du boîtier 380, 480 de chaque appareil modulaire principal 300 et auxiliaire 400 comporte en saillie, dans sa zone médiane, une partie de façade 312, 412 par laquelle ledit boîtier 380, 480 est destiné à émerger hors d'un plastron (non représenté), au travers d'une fenêtre de ce plastron, lorsqu'il est en place sur un rail de support, par exemple dans une armoire électrique.

La partie de façade 312 du boîtier 380 de chaque appareil modulaire principal 300 comporte ici un levier de manoeuvre 325.

Les faces latérales principales 310, 410 du boîtier 380, 480 de chaque appareil modulaire principal 300 et auxiliaire 400 sont destinées à être mises en contact avec les unes avec les autres pour former la rangée 200.

L'une des faces transversale 314, 414 supérieure du boîtier 380, 480 est appelée face d'entrée 314, 414 et est adaptée au raccordement de chaque appareil modulaire principal 300 au peigne de raccordement électrique 100 et de chaque appareil modulaire auxiliaire 400 à des câbles de raccordement 500 (voir figure 1 et 2).

La face d'entrée 314 de chaque appareil modulaire principal 300 comporte ainsi deux ouvertures séparées d'une distance environ égale à la moitié de la largeur d'un module de base, décalées par rapport à la face avant 311 du boîtier 380 et débouchant sur des bornes de connexions 317, 318 logées dans ce boîtier 380 (voir figure 2 et 6).

Ces ouvertures de la face d'entrée 314 permettent aux dents de connexion 117, 118 faisant saillie dudit peigne de raccordement 100 d'accéder auxdites bornes de connexion 317, 318.

Ces bornes de connexion 317, 318 sont ici des bornes de connexion à vis, et la face avant 311 du boîtier 380 comporte, à l'aplomb des ouvertures de la face d'entrée 314 des orifices d'accès 320 donnant accès à des vis de serrage (voir figure 1).

Chacune de ces vis de serrage, lorsqu'elle est vissée, entraîne une cage métallique de serrage qui plaque la dent de connexion 117, 118 dudit peigne de raccordement 100 insérée dans la borne de connexion 317, 318 correspondante contre un élément de contact relié au circuit électrique interne de l'appareil modulaire principal 300.

Comme le montrent plus particulièrement les figures 5 et 6, la face d'entrée 414 de chaque appareil modulaire auxiliaire 400 comporte également ici deux ouvertures 430 alignées parallèlement à la face avant 411 du boîtier 480 et débouchant sur des bornes de connexions logées dans ce boîtier 480.

Ces ouvertures 430 de la face d'entrée 414 permettent aux câbles de raccordement 500 d'accéder auxdites bornes de connexion.

Ces bornes de connexion sont ici des bornes de connexion à vis, et la face avant 411 du boîtier 480 comporte, à l'aplomb des ouvertures de la face d'entrée 414, des orifices d'accès 420 donnant accès à des vis de serrage (voir figure 1) permettant de sécuriser la connexion électrique entre le câble de raccordement 500 et le circuit électrique interne de l'appareil électrique auxiliaire 400 de la manière décrite précédemment.

La face d'entrée 414 de chaque appareil modulaire auxiliaire 400 comporte également, comme représenté notamment sur les figures 5 et 6, un logement 440 vide ou borgne adapté à recevoir librement les dents de connexion 117, 118 inutilisées du peigne de raccordement 100.

La zone ombrée de la figure 6 marque la surface de contact entre la paroi inférieure 120 du peigne de raccordement 100 selon l'invention et les faces d'entrée 314, 414 de la rangée 200 d'appareils modulaires principaux 300 et auxiliaires 400. On notera que cette surface de contact est largement réduite. Elle est ici minimale, ce qui favorise la dissipation de la chaleur produite par effet Joule lors du passage du courant électrique dans le peigne de raccordement 100.

En outre, la présence du biseau 113 de la paroi avant 112 du corps isolant 110 du peigne de raccordement 100 autorise la connexion des câbles de raccordement 500 dans les bornes de connexion des appareils modulaires auxiliaires 400 lorsque ce peigne de raccordement 100 est monté sur les appareils modulaires principaux 300 de la rangée 200, et ce, quelle que soit la position des appareil modulaires auxiliaires 400 dans cette rangée 200.

Comme représenté sur les figures 1 et 2, l'accès aux bornes de connexion de l'appareil modulaire auxiliaire 400 est en effet dégagé car ces bornes débouchent au droit de la partie 111A en porte-à-faux de la paroi supérieure 111 du corps isolant 110 du peigne de raccordement 100 qui s'étend au-dessus des faces d'entrée 314, 414 des appareils modulaire 300, 400 de la rangée 200.

La flexibilité des câbles de raccordement 500 permet alors leur déformation le long du biseau 113 de la paroi avant 112 du corps isolant 110 du peigne de raccordement 100 pour qu'ils puissent être insérés dans l'axe de la borne de connexion logée dans le boîtier 480 de l'appareil modulaire auxiliaire 400.

## Revendications

1. Peigne de raccordement (100) comportant un corps isolant (110) de forme allongée qui comprend
- une paroi inférieure (120) à travers laquelle une partie externe (117, 118) de chaque dent d'au moins une barre de raccordement (151, 152, 153, 154) électrique fait saillie,
- une paroi supérieure (111) opposée à la paroi inférieure, et s'étendant selon un plan parallèle à celui de cette paroi inférieure (120),
- deux parois avant (112) et arrière (115) qui relient lesdites parois supérieure (111) et inférieure (120), ladite paroi arrière (115) étant la plus proche desdites parties externes (117, 118) desdites dents, cette paroi arrière (115) comportant une partie plane (115A) sensiblement perpendiculaire aux parois supérieure (111) et inférieure (120) et la paroi avant (112) comportant une partie plane (112A) sensiblement parallèle à ladite partie plane (115A) de la paroi arrière (115).
**caractérisé en ce que** ladite paroi supérieure (111) comporte, du côté de la paroi avant (112) du corps isolant (110), une partie (111A) s'étendant en porte-à-faux par rapport à la paroi inférieure (120)
et **en ce que** ladite paroi avant (112) comporte un biseau (113) reliant la paroi inférieure (120) à ladite partie plane (112A) de la paroi avant (112).

2. Peigne de raccordement (100) selon la revendication précédente, dans lequel ledit biseau (113) forme avec le plan de ladite paroi inférieure (120) un angle (A1) d'environ 30 degrés.

3. Peigne de raccordement selon l'une des revendications précédentes, dans lequel ladite paroi avant comporte un épaulement.

4. Peigne de raccordement (100) selon l'une des revendications précédentes, dans lequel ladite paroi inférieure (120) encadre au plus près lesdites parties externes (117, 118) desdites dents de chaque barre de raccordement (151, 152, 153, 154).

5. Peigne de raccordement (100) selon l'une des revendications précédentes, dans lequel ladite paroi arrière (115) comporte une partie plane (115A) à partir de laquelle des capots (116) font saillie pour recouvrir une partie interne (118A) de chaque dent d'une barre de raccordement (154).

6. Peigne de raccordement (100) selon l'une des revendications précédentes, dans lequel le corps isolant (110) comporte des cloisons d'appui (114) s'étendant perpendiculairement à l'axe longitudinal (X) du peigne de raccordement (100), à partir de la paroi avant (112) de ce corps isolant (110), au droit de la partie de la paroi supérieure (111) en porte-à-faux au-dessus de la paroi inférieure (120).

7. Peigne de raccordement (100) selon l'une des revendications précédentes, dans lequel il est prévu des renfoncements (140) dans lesdites parois avant (112) et inférieure (120) pour l'insertion de la pointe d'un outil pour la déconnexion du peigne de raccordement (100).

8. Peigne de raccordement (100) selon l'une des revendications précédentes, dans lequel ledit corps isolant (110) loge une pluralité de barres de raccordement (151, 152, 153, 154) isolées les unes des autres par des cloisons internes (170).

## Patentansprüche

1. Anschlusskamm (100) mit einem länglichen, isolierenden Gehäuse (110), das umfasst:
- eine untere Wand (120), durch die ein Außenabschnitt (117,118) jedes Zahns mindestens eines elektrischen Anschlussstabes (151,152,153,154) hindurch ragt;
- eine, der unteren Wand gegenüberliegende, obere Wand (111), die sich in einer zur unteren Wand (120) parallelen Ebene erstreckt;
- eine Vorderwand (112) und eine Rückwand (115), die die untere (120) und die obere (111) Wand miteinander verbinden, wobei die Rückwand (115) den Außenabschnitten (117,118) der Zähne am nächsten liegt und diese Rückwand (115) einen ebenen (115A), zur oberen (111) und unteren (120) Wand im wesentlichen senkrecht liegenden Abschnitt aufweist und die Vorderwand (112) einen ebenen (112A), zum ebenen Abschnitt (115A) der Rückwand (115) im wesentlichen parallelen Abschnitt umfasst, **dadurch gekennzeichnet, dass** die obere Wand (111) auf der Seite der Vorderwand (112) des isolierenden Gehäuses (110) einen Abschnitt (111A) aufweist, der in Bezug zur unteren Wand (120) im Überhang steht, und dadurch, dass diese Vorderwand (112) eine Schrägfläche (113) umfasst, die die untere Wand (120) mit dem ebenen Abschnitt (112A) der Vorderwand (112) verbindet.

2. Anschlusskamm (100) nach vorausgehendem Anspruch, bei dem die Schrägfläche (113) mit der Ebene der unteren Wand (120) einen Winkel (A1) von rund 30 Grad bildet.

3. Anschlusskamm nach einem der vorausgehenden Ansprüche, bei dem die Vorderwand einen Absatz umfasst.

4. Anschlusskamm (100) nach einem der vorausgehenden Ansprüche, bei dem die untere Wand (120) in nächster Nähe die Außenabschnitte (117,118) der Zähne jedes Anschlussstabes (151,152,153,154) einrahmt.

5. Anschlusskamm (100) nach einem der vorausgehenden Ansprüche, bei dem die Rückwand (115) einen ebenen Abschnitt (115A) umfasst, ab dem Kappen (116) hervorstehen, um einen internen Abschnitt (118A) jedes Zahns eines Anschlussstabes (154) abzudecken.

6. Anschlusskamm (100) nach einem der vorausgehenden Ansprüche, bei dem das isolierende Gehäuse (110) Stütztrennwände (114) umfasst, die sich ausgehend von der Vorderwand (112) dieses isolierenden Gehäuses (110) und vor dem Abschnitt der oberen Wand (111), der in Bezug zur unteren Wand (120) im Überhang steht, senkrecht zur Längsachse (X) des Anschlusskammes (100) erstrecken.

7. Anschlusskamm (100) nach einem der vorausgehenden Ansprüche, bei dem in der Vorderwand (112) und Unterwand (120) Vertiefungen vorgesehen sind, um die Spitze eines Werkzeugs einzuführen und den Anschlusskamm (100) damit zu entriegeln.

8. Anschlusskamm (100) nach einem der vorausgehenden Ansprüche, bei dem das isolierende Gehäuse (110) eine Vielzahl von Anschlussstäben (151,152,153,154) aufnimmt, die durch interne Trennwände (170) zueinander isoliert sind.

## Claims

1. A connection comb (100) including an insulating body (110) having a long shape which includes
- a lower wall (120) through which an external part (117, 118) of each tooth of at least one electric connection bar (151, 152, 153, 154) protrudes,
- an upper wall (111) opposite such lower wall, extending along a plane parallel to the plane of this lower wall (120),
- two front (112) and back (115) walls which connect said upper (111) and lower (120) walls, with said back wall (115) being closer to said external parts (117, 118) of said teeth, said back wall (115) including a plane part (115A) substantially perpendicular to said upper (111) and lower (120) walls, and said front wall (112) including a plane part (112A) substantially parallel to said plane part (115A) of the back wall (115),
**characterised in that** said upper wall (111) includes, on the front wall (112) side of the insulating body (110), a part (111A) extending in a cantilever with respect to the lower wall (120),
and **in that** said front wall (112) includes a bevel (113) connecting the lower wall (120) and the plane part (112A) of the upper wall (112).

2. A connection comb (100) according to the preceding claim, wherein said bevel (113) forms an angle (A1) of approximately 30 degrees with the plane of said lower wall (120).

3. A connection comb according to one of the preceding claims, wherein said front wall includes a shoulder.

4. A connection comb (100) according to one of the preceding claims, wherein said lower wall (120) encloses, as close as possible, said external parts (117, 118) of said teeth of each connection bar (151, 152, 153, 154).

5. A connection comb (100) according to one of the preceding claims, wherein said back wall (115) includes a plane part (115A) from which covers (116) protrudes to cover an internal part (118A) of each tooth of a connection bar (154).

6. A connection comb (100) according to one of the preceding claims, wherein the insulating body (110) includes bearing walls (114) extending perpendicularly to the longitudinal axis (X) of the connection comb (100), from the front wall (112) of such insulating body (110), straight below the part of the upper wall (111) in cantilever above the lower wall (120).

7. A connection comb (100) according to one of the preceding claims, wherein recesses (140) are provided in said front (112) and lower (120) walls for inserting the tip of a tool for disconnecting the connection comb (100).

8. A connection comb (100) according to one of the preceding claims, wherein said insulating body (110) receives a plurality of connection bars (151, 152, 153, 154) isolated from each other by internal partitions (170).
